Europäisches Patentamt

European Patent Office

Office européen des brevets

(11) Publication number: **0 085 371**
A1

(12) # EUROPEAN PATENT APPLICATION

(21) Application number: **83100567.3**

(22) Date of filing: **24.01.83**

(51) Int. Cl.³: **F 16 K 41/00**
**F 16 K 41/10**

(30) Priority: **28.01.82 US 343482**

(43) Date of publication of application:
**10.08.83 Bulletin 83/32**

(84) Designated Contracting States:
**AT BE CH DE FR GB IT LI LU NL SE**

(71) Applicant: **A.W. CHESTERTON COMPANY**
**Middlesex Industrial Park Route 93**
**Stoneham Massachusetts 02180(US)**

(72) Inventor: **Bernier, Edgar R.**
**179 Chestnut Street**
**Nashua New Hampshire 03060(US)**

(74) Representative: **Heidrich, Udo, Dr. jur., Dipl.-Phys.**
**Franziskanerstrasse 30**
**D-8000 München 80(DE)**

(54) Mechanical seal for valve.

(57) A mechanical seal for a valve comprising a sleeve (20, 92) surrounding and attached to a shaft (12,94). A first sealing means (32,96) sealing the leakage path between the inside of the sleeve (20,92) and the shaft (12,94), and a second sealing means (40,100) sealing the flow path between the outside of the sleeve (20,92) and a valve housing (74,99) so that seals are maintained despite rotational and axial movement of the shaft (12,94) and without undue wear on the shaft or sleeve.

FIG I

**0085371**

## MECHANICAL SEAL FOR VALVE
### Field of the Invention
This invention relates to seals for valves.

### Background of the Invention

Packing seals are used in the prior art to seal valve shafts. In order to open or close a valve, the valve knob is rotated. This rotates the valve shaft, and the shaft, which usually has some sort of associated screw-threaded apparatus, moves axially. There is usually some leakage around the shafts, and in the prior art, this leakage has been difficult to prevent. The combination of the rotational and axial movement of the shaft results in some shaft wobble, and in the prior art it has been usually necessary to tightly wrap packing material around the shaft. This, however, inhibits shaft movement and wears the shaft. Furthermore, the packing material wears out because of the turning of the shaft and possibly because of the nature of the flow (e.g., steam) controlled by the valve. The worn packing material permits leakage around the shaft. As a result, the prior art valve seals have been unsatisfactory.

### Summary of the Invention

I have discovered that a mechanical valve seal can be made for a valve by attaching a sleeve to the valve shaft, and sealing the inside of the sleeve to the shaft, and the outside of the sleeve to a valve housing, whereby wear on the shaft is avoided and leakage around the shaft is prevented despite shaft rotation and axial movement. Advantageously, the sleeve and associated sealing mechanism may readily be attached or replaced as a unit.

In a preferred embodiment, one end of a flexible bellows is attached to the sleeve, and the other end of the bellows holds a carbon ring. The bellows is somewhat compressed, even when the valve is fully closed, i.e., with the bellows at a maximum expansion, so that the carbon ring is urged upwardly to a sealing position. There is no leakage around the outside of the mechanical seal because of the carbon ring seal, and leakage between the sleeve and the shaft is prevented by an O-ring.

In another preferred embodiment, the sleeve is sealed by several stationary graphite rings which prevent any leakage around the sleeve. Furthermore any wear that occurs, occurs to the sleeve which is less expensive than the shaft and can be much more easily replaced.

Description of the Preferred Embodiment

Drawings

We now turn to a description of the preferred embodiment, after first briefly describing the drawings.

Figure 1 is a cross-sectional view of the mechanical valve seal of the preferred embodiment;

Figure 2 is an exploded perspective view of the valve seal of the preferred embodiment; and

Figure 3 is a cross-sectional view of another mechanical valve seal of this invention.

Structure

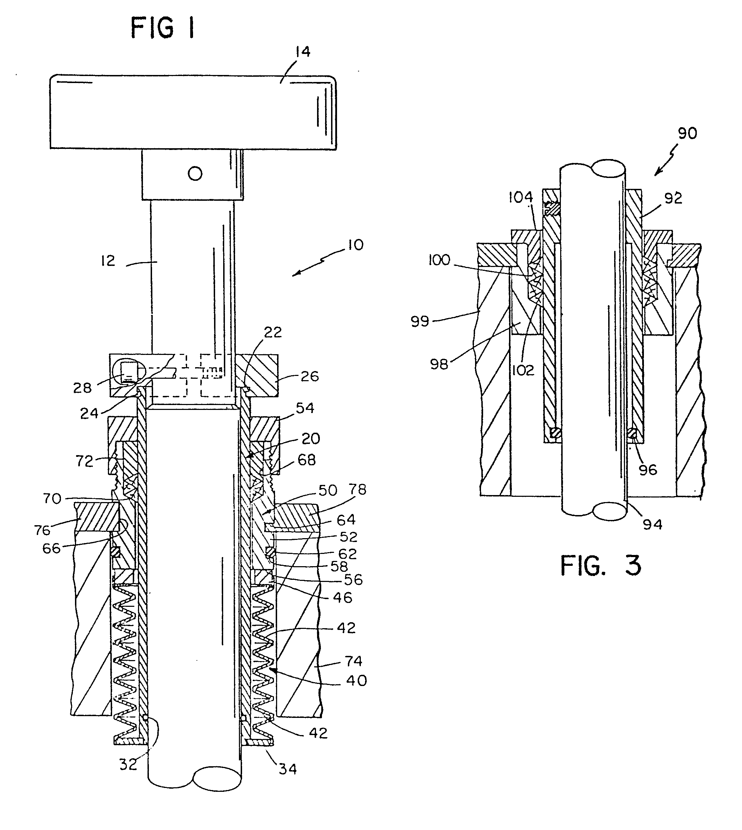

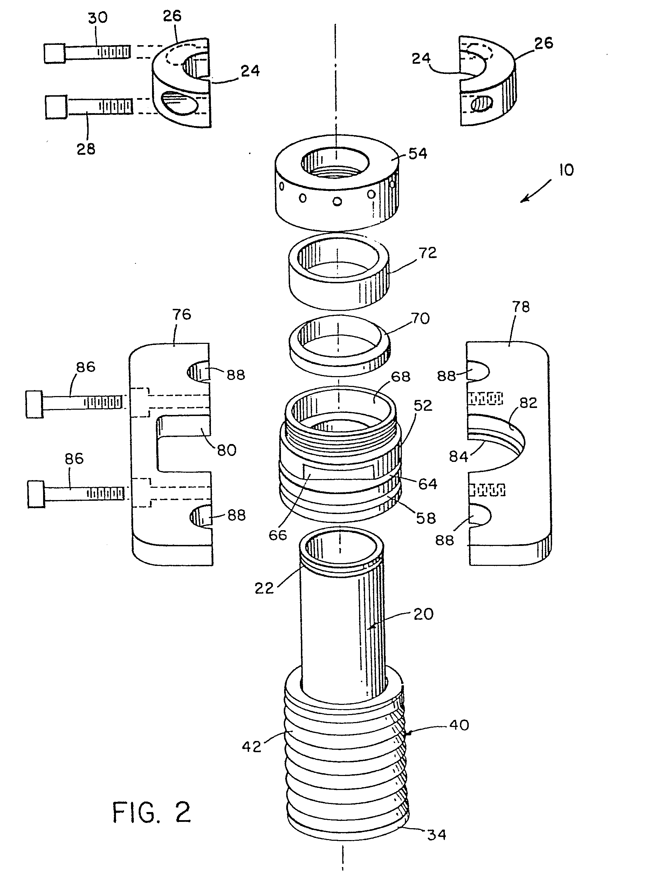

Referring to Figures 1 and 2, a valve seal of this invention is shown at 10. Seal 10 generally comprises a sleeve 20, a bellows 40 and a stationary ring apparatus 50.

A shaft 12 extends through the seal 10. The shaft 12 has a knob 14 on one end, while the opposite end, depending on the longitudinal position of the shaft, selectively entirely blocks, partially blocks, or does not block a flow path (not shown). The blocking is done by conventional means in the valve art.

Sleeve 20 is a hollow cylinder, and it fits over a portion of the shaft 12. Sleeve 20 has an annular groove 22 near its top. Groove 22 receives a flange 24 of a two piece annular clamp 26. The clamp 26 is held together by a pair of screws 28, 30, and when tightened, the clamp 26 secures the sleeve 20 to the shaft 12. At the opposite end of the sleeve 20, an O-ring 32 seals the sleeve 20 to the shaft 12. The lower end of the sleeve 20 also has an outwardly protruding flange 34.

Bellows 40 is a flexible unit with a number of folds 42. Each fold is made of a pair of washers, welded together along their outside edges. The individual folds are welded together along the inside edges. By using washers of different thicknesses, different K factors can be obtained without changing the overall length of the bellows. Bellows of this type are available from Belfab/Bailey Controls Co., Daytona Beach, Florida. Bellows 40 surrounds the lower portion of the sleeve 20, and the lower end of the bellows 40 is welded to the flange 34 of the sleeve 20. A retainer 44 extends around and is welded to the top end of the bellows 40. Carbon ring 46 is glued to the inside of the retainer 44, although a force fit may also be used.

Ring apparatus 50 comprises a stainless steel collar 52 with a cap 54. Collar 52 can be made of other materials. Collar 52 fits over the sleeve 20, and a bottom face 56 of the collar 52 contacts the top of the carbon ring 56 held by the bellows 40. Bottom face 56 may be coated with ceramic. In the alternative, the carbon ring 46 could be attached to the bottom of the collar 52. An O-ring groove 58 extends around the outside of the bottom of the collar 52, and groove 58 holds O-ring 62. A second groove 64 extends around the collar 52 above the O-ring groove 62. As best shown in Figure 2, a portion of the side of collar 52 above the second groove 62 is cut away forming a channel 66. (The collar 52 is turned 90° from its normal position in Figure 2 to show the channel more fully.)

- 4 -

A portion 68 of the inside of the top of the collar 52 is cut away, as best shown in Figure 1. Compressible sealing rings 70 fit inside the portion 68. A spacer 72 rides on top of the sealing rings 70, and the force of the cap 54 on the spacer 72 will push the spacer 72 against the rings 70. This arrangement and the rings 70 are the same as those in A. W. Chesterton Company's U.S. Patent No. 4,327,923 issued May 4, 1982, assigned to the same assignee as this application, and incorprated herein by reference.

The mechanical seal 10 of this invention is secured to the valve housing 74 by two plates 76, 78, best shown in Figure 2. First plate 76 has a rectangular opening 80 at its midsection, and the opening 80 receives the channel 66 of the collar 52, when the plate is in place. This prevents the collar 52 from rotating with respect to the plate 76. The second plate 78 has a circular opening 82 with a protruding flange 84. Flange 84 is received by the groove 64 in the collar 52. When the plates 76, 78 are so connected to the collar 52, screws 86 secure the plates together. The combined plates are then bolted to the valve housing 74 by the use of bolts (not shown) and the bolt holes 88 formed by the combined plates. With the collar 52 so attached, it remains stationary despite rotation of the shaft 12 and sleeve 20.

Operation

In operation, the knob 14 of valve 10 is turned to rotate the shaft 12. As the knob 14 is turned, the shaft 12 moves vertically (in Fig. 1) because of a screw-threaded arrangement (not shown), and the valve 10 is opened or closed. Sleeve 20 is secured to the shaft and rotates with it. Also, as the bellows 40 is welded to the sleeve flange 34, the bellows 40 rotates with the shaft 12. Any leakage between the sleeve 20 and the shaft 12 is prevented by O-ring 32. O-ring 32 does not wear because, as explained, there is no movement between sleeve 20 and shaft 12.

The potential leakage path on the outside of the sleeve 20 is sealed by the bellows 40. The bottom of the bellows 40 is welded to the sleeve flange 34. The force of the bellows 40 trying to expand its folds 42 presses the carbon ring 46 at the top of the bellows 40 against the stationary bottom face 56 of the collar 52. The force of the ring 46 against the face 56 prevents any leakage therebetween. The bellows 40 is long enough so that this force continues even when the shaft 12 is at its lowest position, i.e., the flange 34 is farthest away from the bottom face 56 of the collar 52. Further, the carbon ring 46 remains in contact with face 56 as the shaft (and bellows 40) turns, and any shaft wobble does not affect the seal between the ring and collar. Also, as the ring 46 is carbon, there is little friction between the ring 46 and the collar 52. The potential leakage path around the outside of the collar 52 is sealed by O-ring 62 which presses against the valve housing 74.

In the unlikely event any leakage occurs between the carbon ring 46 and the collar face 56, the sealing rings 70 which press against the side of the sleeve 20 prevent the fluid from escaping from the valve 10. This secondary seal is important in those applications in which zero leakage is a necessity.

Other Embodiments

Referring to Fig. 3, another valve according to the invention is shown at 90. A sleeve 92 is attached to a shaft 94 in the same manner as in the preferred embodiment. O-ring 96 seals the sleeve 92 to the shaft 94. Collar 98, which is secured to housing 99 in the same manner as the preferred embodiment, holds some sealing rings 100, which are the same type as those 70 of the preferred embodiment. The rings 100 are held in a groove 102 and a retainer 104 presses down against the rings 100, forcing them against the sleeve 92.

In operation, leakage between the sleeve 92 and shaft 94 is prevented by 0-ring 96, and the rings 100 prevent leakage between the sleeve 92 and the collar 98. The collar 98 is sealed to the housing 99 by conventional means (e.g., 0-rings) not shown.

Other variations will occur to those skilled in the art.

What is claimed is:

## Claims

1. A valve seal for a valve having a stationary housing (74,99) and a shaft (12, 94) which rotates and moves axially characterized in that said valve seal comprises:

a sleeve (20, 92) which fits around a portion of said shaft,

said sleeve having a first seal means (32, 96) to seal the inside of said sleeve to said shaft to prevent leakage therebetween, and a second seal (40, 100) means to seal the outside of said sleeve to a valve housing supporting said shaft.

2. The valve seal of claim 1, further characterized in that said first seal means is an 0-ring seal (32, 96).

3. The valve seal of claims 1 or 2 further characterized in that said second seal means is a bellows (40), one end of said bellows being sealed to said sleeve (2), and the other end of said bellows adapted to be sealed to the housing (74).

4. The valve seal of claim 3 further characterized in that the lower end of said bellows (40) is sealingly connected to a flange (34) on the lower end of said sleeve (20).

5. The valve seal of claim 3 or 4 further characterized in that sleeve (20) is adapted to move with the shaft (12) and said bellows (40) is secured to and move with said sleeve (20), said first seal means (32) is positioned inside said sleeve (20) for sealing against the shaft (12) with no relative movement therebetween, said bellows (40) has a third seal means (46) on its upper end, which said third seal means (46) rotates with said bellows (40), said bellows adapted to force, regardless of the position of said shaft, said third seal means (46) to a sealing position upwardly away from said flange (34).

6. The valve seal of claim 5 further characterized in comprising a collar (52) adapted to be secured to the housing (74) and to surround the shaft (12), the collar (52) contacting said third sealing means (46).

7. The valve seal of claims 5 or 6 further characterized in that said third sealing means (46) is a carbon ring.

8. The valve seal of claim 6 further characterized in comprising a pair of plates (76, 78) adapted to secure said collar to said housing to prevent the collar (52) from turning with respect to the housing (74).

9. The valve seal of claims 6 or 7 further characterized in that said sleeve (20) has a fourth seal means (70), said fourth seal means (70) comprising at least one seal ring disposed inside an open portion (68) of said collar (52) and sealing against said sleeve (20).

10. The valve seal of claim 1 further characterized in that said second seal means comprises at least one sealing ring (100), said ring being supported by the housing (99), surrounding a portion of said sleeve (92) and preventing leakage between said sleeve (92) and the housing (99).

11. The valve seal of claim 10 wherein said one sealing ring (100) is graphite and is adapted to be supported by a stationary collar (98) attached to the housing (99), said ring contacting said sleeve (92) and preventing leakage between said sleeve (92) and said collar (98).

0085371

FIG 1

14

12

10

22

28

24

26

54

20

68

72

50 78

70

64

76

52

66

62

58

56

46

42

74

40

42

32

34

FIG. 3

90

104

92

100

99

98

102

96

94

FIG. 2

| | DOCUMENTS CONSIDERED TO BE RELEVANT | | EP 83100567.3 |
|---|---|---|---|
| Category | Citation of document with indication, where appropriate, of relevant passages | Relevant to claim | CLASSIFICATION OF THE APPLICATION (Int. Cl. ³) |
| A | DE - A - 2 257 096 (ATOMIK ENERGY OF CANADA LTD)<br><br>* Claims 1,3-5; fig. *<br><br>-- | 1 | F 16 K 41/00<br>F 16 K 41/10 |
| A | FR - A - 2 116 920 (COMPAGNIE FRANCAISE DES PETROLES)<br><br>* Totality *<br><br>-- | 1 | |
| A | GB - A - 1 483 481 (HOPKINSONS LTD)<br><br>* Page 1, line 91 - page 2, line 64; fig. 1B,1D,2A,2B *<br><br>-- | 1 | |
| A | DE - C - 1 096 945 (G.F. GEROTS K.G.)<br><br>* Totality *<br><br>---- | | TECHNICAL FIELDS SEARCHED (Int Cl ³)<br><br>F 16 K 1/00<br>F 16 K 41/00<br>F 16 J 3/00 |

The present search report has been drawn up for all claims

| Place of search | Date of completion of the search | Examiner |
|---|---|---|
| VIENNA | 10-05-1983 | ROUSSARIAN |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document but published on, or after the filing date
D : document cited in the application
L : document cited for other reasons

& : member of the same patent family, corresponding document

EPO Form 1503 03.82